# EUROPÄISCHE PATENTSCHRIFT

(11) **EP 2 119 877 B1**
(45) Veröffentlichungstag und Bekanntmachung des Hinweises auf die Patenterteilung: **23.10.2013**
(21) Anmeldenummer: 09158418.5
(22) Anmeldetag: 22.04.2009
(51) Int. Cl.: F01D 25/16, F02C 3/06, F02C 7/06

(54) **Lageranordnung in einem Zwei-Wellen-Triebwerk für eine Fluggasturbine zur Kompensation der Lagerlasten**
Arrangement of bearings in a dual-shaft engine for an aero gas turbine to compensate the bearingloads
Disposition des paliers dans une turbine à deux arbres pour une turbine à gaz d'un aéronef pour compenser les charges des paliers

(30) Priorität: 16.05.2008 DE 102008023990
(43) Veröffentlichungstag der Anmeldung: 18.11.2009
(73) Patentinhaber: Rolls-Royce Deutschland Ltd & Co KG, 15827 Blankenfelde-Mahlow (DE)
(72) Erfinder: Venter, Gideon, 14165 Berlin (DE)
(74) Vertreter: Gross, Felix

(56) Entgegenhaltungen:
- GB-A- 1 130 279
- US-A- 3 526 092
- US-A- 5 160 251

## Beschreibung

Die Erfindung bezieht sich auf ein Zwei-Wellen-Triebwerk für eine Fluggasturbine, mit einer zentralen Niederdruckwelle, mit einer diese co-axial umgebenden Hochdruckwelle und mit Lagereinheiten zur Abstützung der Wellen am Triebwerksgehäuse, wobei die Lagerlast der Hochdruckwelle stromauf zum Fan und die Lagerlast der Niederdruckwelle stromab und somit entgegengesetzt gerichtet sind.

Bei bekannten Zwei-Wellen-Triebwerken der gattungsgemäßen Art sind Schublagereinheiten erforderlich, um die jeweiligen Wellen in Axialrichtung festzulegen, da die Schublasten sowohl des Niederdruck- als auch des Hochdrucksystems des Zwei-Wellen-Triebwerkes auf diese einwirken. Wenn das Triebwerk läuft, ist die Schublast des Hochdruck-Systems stromauf, d.h. nach vorne zum Fan, gerichtet, wohingegen die Lagerlast des Niederdruck-Systems stromab, d. h. nach hinten, gerichtet ist. Bei Zwei-Wellen-Triebwerken dieser Bauart wirkt die Schublast des Hochdruck-Systems in entgegengesetzter Richtung zu der Schublast des Niederdruck-Systems. Außerdem ist die Schublast des Hochdruck-Systems größer als die Schublast des Niederdruck-Systems. Bei herkömmlichen Zwei-Wellen-Triebwerken werden einreihige Schublagereinheiten verwendet, um sowohl die axialen als auch die radialen Schublasten abzufangen.

Die Wellen des Hochdruck- und des Niederdrucksystems sind unabhängig voneinander gelagert und ölgedämpft ohne jede Zwischenaktion. Die Lagerlasten jedes der Systeme werden durch die entsprechenden Schublagereinheiten auf die Triebwerksstruktur bzw. auf das Triebwerksgehäuse übertragen.

Wenn die Triebwerksgeometrie für eine hohe Leistung optimiert ist, übersteigt die Schublast des Hochdruck-Systems die Lagerkapazität um einen erheblichen Betrag. Um die Lagerlasten auf ein annehmbares Niveau zu reduzieren, muß die Triebwerkskonstruktion geändert werden, was im Allgemeinen zu einer Verminderung der Triebwerksleistung und zu einer wesentlichen Erhöhung des Triebwerksgewichtes führt.

Herkömmliche Triebwerks-Konstruktionen sind in der Schublast beschränkt, die eine Hochdruck-Schublagereinheit übernehmen kann. Um die Schublasten der Lagereinheiten zu vermindern, muß der Durchmesser der Hochdruckturbine vergrößert werden, was bei einer ummantelten Konstruktion in einer entsprechenden Verminderung an Triebwerksleistung und einer Gewichts- und Kostenerhöhung resultiert.

Das Dichtungssystem muß auch angepaßt werden, um die Schublasten auszugleichen. Dies erfordert mehr Dichtluft, was eine Wirkung auf die Leistung des Triebwerks und den Treibstoffverbrauch hat.

Es ist aus den folgenden Gründen nicht möglich, die Lagerabmessungen einfach zu vergrößern:
- Herkömmlicher Lagerstahl ist an der Grenze der Eigenschaften des Lagermaterials. Die Verwendung von Keramiklagern erlaubt eine Erhöhung der Lasten und Geschwindigkeiten, aber nicht in einem Ausmaß, das eigentlich erforderlich wäre.
- Die Rotationsgeschwindigkeit des Hochdrucksystems begrenzt die Abmessungen der Lagerelemente. Die Zentrifugalkraft fugalkraft auf im wesentlichen die Rollenelemente ist begrenzt durch das Leistungsvermögen des Lagermaterials.
- Die Triebwerksgestaltung (Kern-Luft-Gas-Pfad) begrenzt die radialen Abmessungen des Lagers. Je größer das Lager ist, um so mehr muß das Lager nach vorne zum Fan platziert werden. Dies erfordert, dass die Hochdruck-Kompressorwelle mit einer negativen Wirkung auf die Festigkeit der Welle und die Drehzahlgrenzen verlängert werden muß.

Nachteilig ist auch, dass das Hochdruck-Wellenlager die Leistung des gesamten Triebwerkes begrenzt, da das Hochdruck-Wellenlager nur eine begrenzte Lebensdauer hat. Das Hochdruck-Wellenlager hat somit eine zentrale Bedeutung für die Auslegung des Triebwerkes.

Die Niederdruck-Lagereinheit ist regelmäßig überdimensioniert, da diese u.a. für den Fall einer Unwucht des Fans ausgelegt wird, die beim Abbrechen einer Fanschaufel auftreten kann.

Die GB 1,130,279 beschreibt eine Lageranordnung zwischen einer Hochdruckwelle und einer Niederdruckwelle eines Zwei-Wellen Triebwerks.

Aus der US 3,526,092 ist Gasturbine mit zwei Wellen bekannt, bei der zwischen der Hochdruckwelle und der Niederdruckwelle ein Stürzlager angeordnet ist.

Die US 5,160,251 beschreibt ebenfalls die Lagerung in einem Zwei-Wellen Triebwerk.

Der Erfindung liegt die Aufgabe zugrunde, eine Verringerung der Lagerlast der Hochdruck-Lagereinheit zu erreichen und damit die vorgenannten Nachteile herkömmlicher Zwei-Wellen-Triebwerke zu vermeiden.

Zur Lösung dieser Aufgabe sieht die Erfindung vor, dass die entgegengesetzt gerichteten Lagerlasten von der Niederdruckwelle auf die Hochdruckwelle einwirken. Die sich ergebende Schublast des Hochdrucksystems ist dann nur ein Teilbetrag des Leistungsvermögens bei voller Lagerbelastung, die normalerweise auf die Hochdrucklagereinheit einwirkt.

Dies kann durch eine Verlagerung der Schublagereinheit der Niederdruckwelle auf ein Zwischenwellen-Hochdruck- und Niederdruck-Schublastlager erreicht werden. Das Zwischenwellenlager kann entweder in der vorderen oder in der rückwärtigen bzw. hinteren Lagerkammer des Triebwerksgehäuses angeordnet werden.

Dies ermöglicht eine Optimierung der Hochdruckturbine und anderer Bauelemente, die in einem ummantelten Design mit einer entsprechenden Verbesserung in der Leistung des Triebwerkes und in einer Verminderung des Gewichtes und der Kosten resultieren.

In weiterer Ausbildung der Erfindung sind die vordere Schublagereinheit der Hochdruckwelle am Triebwerksgehäuse und die vordere Schublagereinheit der Niederdruckwelle an der Hochdruckwelle abgestützt. Die entgegenwirkenden Kräfte der Hochdruck-Lagereinheit und der Niederdruck-Lagereinheit werden somit kompensiert, indem die Niederdrucklagereinheit an der Hochdruck-Welle abgestützt wird. Anstelle des bisherigen Niederdruck-Kugellagers tritt dann ein Niederdruck-Wellen-Rollenlager, das hohe radiale Kräfte, aber kaum axiale Kräfte aufnehmen kann.

Damit wird die Hochdruck-Axiallast teilweise von der Niederdruck-Axiallast kompensiert. Hierdurch kann die Baugröße der Turbine bei gleicher Leistung verringert werden, womit auch eine Einsparung an Gewicht einhergeht und die Effizienz, d.h. die Energieausbeute steigt.

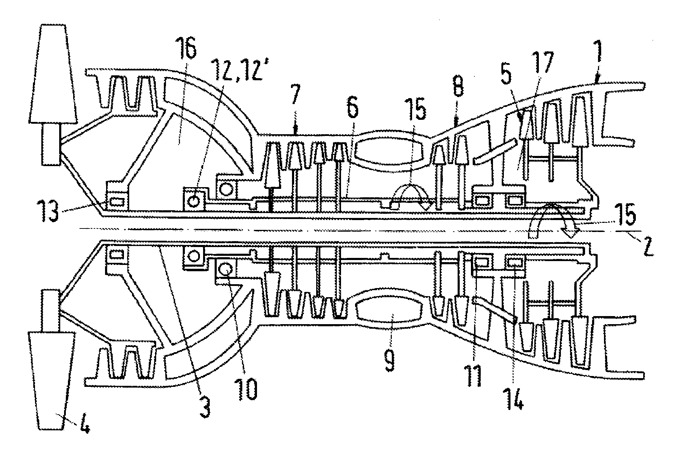

Die Erfindung ist nachfolgend anhand eines in der Zeichnung dargestellten Ausführungsbeispieles eines Zwei-Wellen-Triebwerkes für eine Fluggasturbine näher erläutert. Die einzige Figur zeigt einen prinzipiellen Längsschnitt durch das Zwei-Wellen-Triebwerk.

Das dargestellte Zwei-Wellen-Triebwerk umfasst ein Gehäuse 1 mit einer darin in der Triebwerksachse 2 gelagerten Niederdruckwelle 3 mit einer eingangsseitigen Triebwerks-Fan 4 und einer ausgangsseitigen Niederdruckturbine 5. Eine Hochdruckwelle 6 umgibt die Niederdruckwelle 3 co-axial und weist einen Hochdruck-Kompressor 7 und eine Hochdruck-Turbine 8 auf, zwischen denen eine Brennkammer 9 im Gehäuse 1 angeordnet ist. Die Niederdruck-Welle 3 rotiert in gleicher Drehrichtung wie die Hochdruck-Welle 6, wie es die beiden Rotationsrichtungspfeile 15 zeigen.

Die Hochdruckwelle 6 ist stromauf des Hochdruck-Kompressors 7 in einer vorderen Lagerkammer 16 des Gehäuses 1 mittels einer als Hochdruck-Kugellager ausgebildeten Schublagereinheit 10 und stromab der Hochdruck-Turbine 8 in einer hinteren Lagerkammer 17 mittels einer als Hochdruck-Rollenlager ausgebildeten hinteren Lagereinheit 11 unmittelbar am Gehäuse 1 gelagert.

Die Niederdruckwelle 3 ist stromauf in der vorderen Lagerkammer 16 im Gehäuse 1 unmittelbar neben der als Hochdruck-Kugellager ausgebildeten Schublagereinheit 10 für die Hochdruckwelle 6 an der Hochdruckwelle 6 mittels einer als Niederdruck-Kugellager ausgebildeten Schublagereinheit 12 gelagert, die auch als Niederdruck/Hochdruck-Zwischenwellenlager 12' bezeichnet werden kann. Die Niederdruckwelle 3 ist ferner unmittelbar stromab der Triebwerks-Fan 4 in der vorderen Lagerkammer 16 und unmittelbar stromauf der Niederdruck-Turbine 5 in der hinteren Lagerkammer 17 im Gehäuse 1 mittels Niederdruck-Rollenlagern 13 bzw. 14 unmittelbar am Gehäuse 1 gelagert.

Durch die Abstützung der als Niederdruck-Kugellager ausgebildeten Schublagereinheit 12 der Niederdruckwelle 3 unmittelbar an der Hochdruckwelle 6 und stromauf der als Hochdruck-Kugellager ausgebildeten Schublagereinheit 10 der Hochdruckwelle 6, welche Schublagereinheit 10 sich unmittelbar am Gehäuse 1 abstützt, wird die axiale Lagerlast der Hochdruckwelle 6 mittels der Lagerlast der Niederdruckwelle 3 teilweise kompensiert.

In nicht näher dargestellter Weise kann die als Niederdruck-Kugellager ausgebildete Schublagereinheit 12 bzw. das Zwischenwellenlager 12' der Niederdruckwelle 3 sowohl in der hinteren Lagerkammer 17 nahe der hinteren, als Hochdruck-Rollenlager ausgeführten Lagereinheit 11 der Hochdruckwelle 6 als auch zwischen der vorderen und der hinteren Lagereinheit 10 bzw. 11 der Hochdruckwelle 6 angeordnet werden.

### Bezugszeichenliste

- 1: Gehäuse
- 2: Triebwerksachse
- 3: Niederdruckwelle
- 4: Triebwerks-Fan
- 5: Niederdruck-Turbine
- 6: Hochdruckwelle
- 7: Hochdruck-Kompressor
- 8: Hochdruck-Turbine
- 9: Brennkammer
- 10: Schublagereinheit (Hochdruck-Kugellager)
- 11: hintere Lagereinheit (Hochdruck-Rollenlager)
- 12: Schublagereinheit (Niederdruck-Kugellager)
- 12': Zwischenwellenlager
- 13: vordere Lagereinheit (Niederdruck-Rollenlager)
- 14: hintere Lagereinheit (Niederdruck-Rollenlager)
- 15: Rotationsrichtungspfeil
- 16: vordere Lagerkammer
- 17: hintere Lagerkammer

## Patentansprüche

1. Zwei-Wellen-Triebwerk für eine Fluggasturbine, mit einer zentralen Niederdruckwelle, einer diese co-axial umgebenden Hochdruckwelle und mit Lagereinheiten zur Abstützung der Wellen am Triebwerksgehäuse, wobei die Lagerlast der Hochdruckwelle stromauf zum Fan und die Lagerlast der Niederdruckwelle stromab und somit entgegengesetzt gerichtet sind,
**dadurch gekennzeichnet, dass**
die vordere Schublagereinheit (10) der Hochdruckwelle (6) am Triebwerksgehäuse (1) und die vordere Schublagereinheit (12) der Niederdruckwelle (3) an der Hochdruckwelle (6) abgestützt sind und somit die entgegengesetzt gerichteten axialen Lagerlasten der Niederdruckwelle (3) und der Hockdruwelle (6) teilweise kompensiert werden.

2. Zwei-Wellen-Triebwerk nach Anspruch 1, **dadurch gekennzeichnet, dass** die Schublagereinheit (12) der Niederdruckwelle (3) als Zwischenwellenlager (12') ausgeführt ist.

3. Zwei-Wellen-Triebwerk nach Anspruch 2, **dadurch gekennzeichnet, dass** das Zwischenwellenlager (12') der Niederdruckwelle (3) in der vorderen Lagerkammer (16) nahe der vorderen Schublagereinheit (10) der Hochdruckwelle (6) angeordnet ist.

4. Zwei-Wellen-Triebwerk nach Anspruch 2, **dadurch gekennzeichnet, dass** das Zwischenwellenlager (12') der Niederdruckwelle (3) in der hinteren Lagerkammer (17) nahe der hinteren Lagereinheit (11) der Hochdruckwelle (6) angeordnet ist.

5. Zwei-Wellen-Lager nach Anspruch 2, **dadurch gekennzeichnet, dass** das Zwischenwellenlager (12') der Niederdruckwelle (3) zwischen der vorderen und der hinteren Lagereinheit (10 bzw. 11) der Hochdruckwelle (6) angeordnet ist.

## Claims

1. Two-shaft engine for an aircraft gas turbine with a central low-pressure shaft, a high-pressure shaft co-axially surrounding the low-pressure-shaft and with bearing units to support the shafts on the engine casing, with the bearing load of the high-pressure shaft being directed upstream towards the fan and the bearing load of the low-pressure shaft being directed downstream and thus oppositely to the latter,
**characterized in that**
the front thrust bearing unit (10) of the high-pressure shaft (6) is supported on the engine casing (1) and the front thrust bearing unit (12) of the low-pressure shaft (3) is supported on the high-pressure shaft (6), with the oppositely directed axial bearing loads of the low-pressure shaft (3) and of the high-pressure shaft (6) thus being partly compensated.

2. Two-shaft engine in accordance with Claim 1, **characterized in that** the thrust bearing unit (12) of the low-pressure shaft (3) is designed as intermediate-shaft bearing (12').

3. Two-shaft engine in accordance with Claim 2, **characterized in that** the intermediate-shaft bearing (12') of the low-pressure shaft (3) is arranged in the front bearing chamber (16) near the front thrust bearing unit (10) of the high-pressure shaft (6).

4. Two-shaft engine in accordance with Claim 2, **characterized in that** the intermediate-shaft bearing (12') of the low-pressure shaft (3) is arranged in the rear bearing chamber (17) near the rear bearing unit (11) of the high-pressure shaft (6).

5. Two-shaft engine in accordance with Claim 2, **characterized in that** the intermediate-shaft bearing (12') of the low-pressure shaft (3) is arranged between the front and the rear bearing unit (10 and 11) of the high-pressure shaft (6).

## Revendications

1. Moteur à deux arbres pour une turbine à gaz aéronautique, comprenant un arbre basse pression central, un arbre haute pression l'entourant coaxialement ainsi que des unités de palier pour loger les arbres sur le carter du moteur, sachant que la charge de palier de l'arbre haute pression est dirigée vers l'amont en direction de la soufflante et que la charge de palier de l'arbre basse pression est dirigée vers l'aval, et qu'ainsi, ces charges sont en sens opposés,
**caractérisé en ce que**
l'unité de palier de poussée avant (10) de l'arbre haute pression (6) s'appuie sur le carter du moteur (1) et l'unité de palier de poussée avant (12) de l'arbre basse pression (3) s'appuie sur l'arbre haute pression (6) et qu'ainsi, les charges de palier axiales et opposées de l'arbre basse pression (3) et de l'arbre haute pression (6) sont partiellement compensées.

2. Moteur à deux arbres selon la revendication n° 1, **caractérisé en ce que** l'unité de palier de poussée (12) de l'arbre basse pression (3) est conçue en tant que palier d'arbre intermédiaire (12').

3. Moteur à deux arbres selon la revendication n° 2, **caractérisé en ce que** le palier d'arbre intermédiaire (12') de l'arbre basse pression (3) est disposé dans le logement de palier avant (16) à proximité de l'unité de palier de poussée avant (10) de l'arbre haute pression (6).

4. Moteur à deux arbres selon la revendication n° 2, **caractérisé en ce que** le palier d'arbre intermédiaire (12') de l'arbre basse pression (3) est disposé dans le logement de palier arrière (17) à proximité de l'unité de palier arrière (11) de l'arbre haute pression (6).

5. Moteur à deux arbres selon la revendication n° 2, **caractérisé en ce que** le palier d'arbre intermédiaire (12') de l'arbre basse pression (3) est disposé entre l'unité de palier avant et l'unité de palier arrière (10 et 11) de l'arbre haute pression (6).
